# EUROPEAN PATENT APPLICATION

(11) **EP 2 136 186 A1**
(43) Date of publication of application: **23.12.2009**
(21) Application number: 09162947.7
(22) Date of filing: 17.06.2009
(51) Int. Cl.: G01F 1/58, G01F 15/00, G01F 15/14, H01B 17/30, H02G 15/013

(54) **Electromagnetic flowmeter**

(30) Priority: 17.06.2008 JP 2008158030
(71) Applicant: Yamatake Corporation, Tokyo 100-6419 (JP)
(72) Inventor: Izumi, Kouji, Tokyo 100-6419 (JP)
(74) Representative: Pons Ariño, Angel

(57) **Abstract**

To ensure, with ease, airtightness of an internal cavity when connecting a shielded lead lines to the outside. Tubes are installed on the portions of shields of lead lines positioned at through passages of a packing. An adhesive agent is caused to flow between the tubes and the shields, to bond therebetween. Doing so maintains an airtight seal through the adhesive agent (an adhesive agent that is caused to penetrate the spaces in the meshes of the shields, and hardened therein) between the shields and the inner peripheral surfaces of the tubes of the lead lines through the inner peripheral surfaces of the through passages of the packing and the outer peripheral surfaces of the tubes of the lead lines being tightly sealed.

## Description

### CROSS REFERENCE TO PRIOR APPLICATIONS

The present application claims priority under 35 U.S.C. § 119 to Japanese Patent Application No. JP2008-158030, filed June 17, 2008. The content of the application is incorporated herein by reference in its entirety.

### FIELD OF TECHNOLOGY

The present invention relates to an electromagnetic flowmeter for measuring a current of a fluid having electrical conductivity.

### Background of the Invention

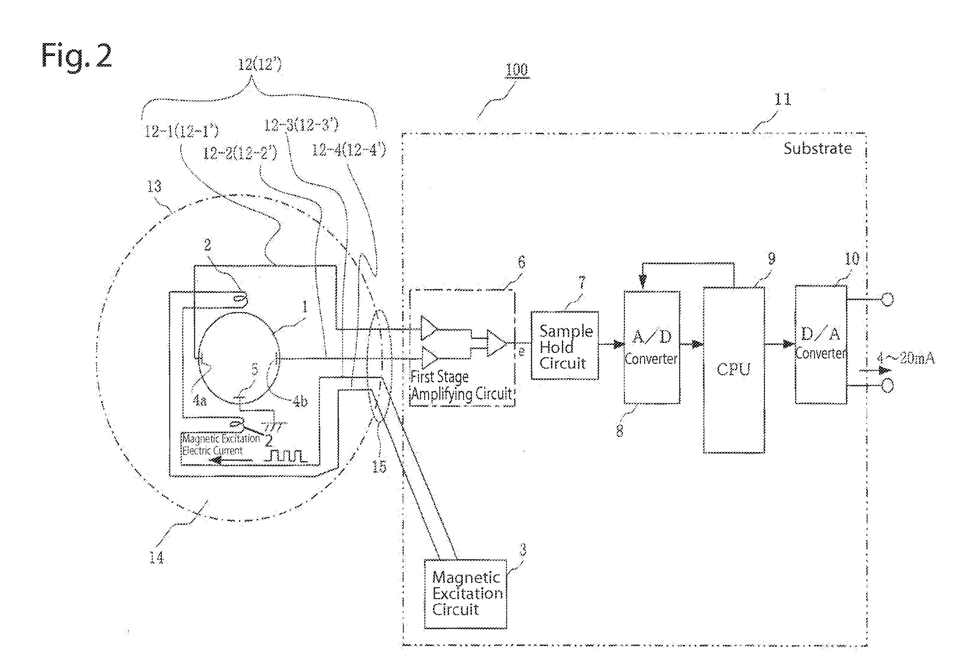

FIG. 2 is a block diagram illustrating the critical components of an electromagnetic flowmeter that is typically used. In this figure: 1 is a measuring tube; 2 is a magnetic excitation coil that is disposed so that the direction in which the magnetic field thereof is produced will be perpendicular to the direction of flow of the fluid that flows within the measuring tube 1; 3 is a magnetic excitation circuit for providing a square wave magnetic excitation electric current periodically to the magnetic excitation coil 2; 4a and 4b are detecting electrodes (hereinafter termed simply "electrodes") disposed facing each other within the measuring tube 1, perpendicular to the direction in which the magnetic field is produced by the excitation coil 2; 6 is a first stage amplifying circuit for detecting the signal inducing electric and magnetic fields (EMF) that is produced between the electrodes 4a and 4b; 7 is a sample hold circuit for holding the signal inducing EMF that is detected by the first stage amplifying circuit 6 prior to the periodic switching of the direction of flow of the magnetic excitation electric current, to cause the held signal inducing EMF to be an analog current signal; 8 is an A/D converting circuit for converting the analog current signal from the sample hold circuit 7 into a digital current signal; 9 is a CPU; and 10 is a D/A converter.

In the electromagnetic flowmeter 100, the magnetic excitation circuit 3 periodically provides a magnetic excitation electric current to the magnetic excitation coil 2 to cause an alternating magnetic field to be produced within the measuring tube 1. This causes a signal inducing EMF to be produced through the interaction between the magnetic field and the velocity of flow of the liquid that flows in the measuring tube 1 between the electrodes 4a and 4b, where this signal inducing EMF is applied to the sample hold circuit 7 through the first stage amplifying circuit 6. Note that the signal inducing EMF e that is applied to the sample hold circuit 7 is expressed by e = k · B ·v · D, where k is a constant, D is the inner diameter of the measuring tube 1, v is the average velocity of flow of the fluid, and B is the magnetic flux density that is produced.

The signal evoking EMF e from the first stage amplifying circuit 6 is held by the sample hold circuit 7 prior to the periodic switching of the direction of flow of the magnetic excitation electric current, where this held signal inducing EMF e is caused to be an analog current signal. Here the analog current signal from the sample hold circuit 7 is applied to the A/D converter 8, to be converted into a digital flow signal at a sampling interval based on an instruction from the CPU 9, and is inputted into the CPU 9. The CPU 9 calculates a measurement value, as a value between 0 and 100%, from the digital flow signal from the A/D converter 8, and outputs an analog signal (an electric current signal in the range of 4 to 20 mA) in accordance with the calculated measurement value through a D/A converter 10.

In the structure of the electromagnetic flowmeter 100, electric circuits such as the magnetic excitation circuit 3, the first stage amplifying circuit 6, the sample hold circuit 7, the A/D converter 8, the CPU 9, the D/A converter 10, and so forth, are mounted on a circuit board 11, where the circuit board 11 is connected to the magnetic excitation coil 2 and the electrodes 4a and 4b through a lead line bundle 12 (lead lines 12-1 through 12-4).

This lead line bundle 12 passes through an inner cavity 14 that is formed by the outer wall of the measuring tube 1 and the inner wall of a case 13 that contains the measuring tube 1, and passes through a lead-out passage 15 that is formed in the case 13, to reach the external circuit board 11. Here the lead-out passage 15 must be robustly sealed in order to maintain the airtightness of the inner cavity 14, where a grommet structure such as proposed in Japanese Unexamined Patent Application Publication H9-178522 and Japanese Unexamined Patent Application Publication H11-132803 is used as the seal structure for the lead-out passage 15.

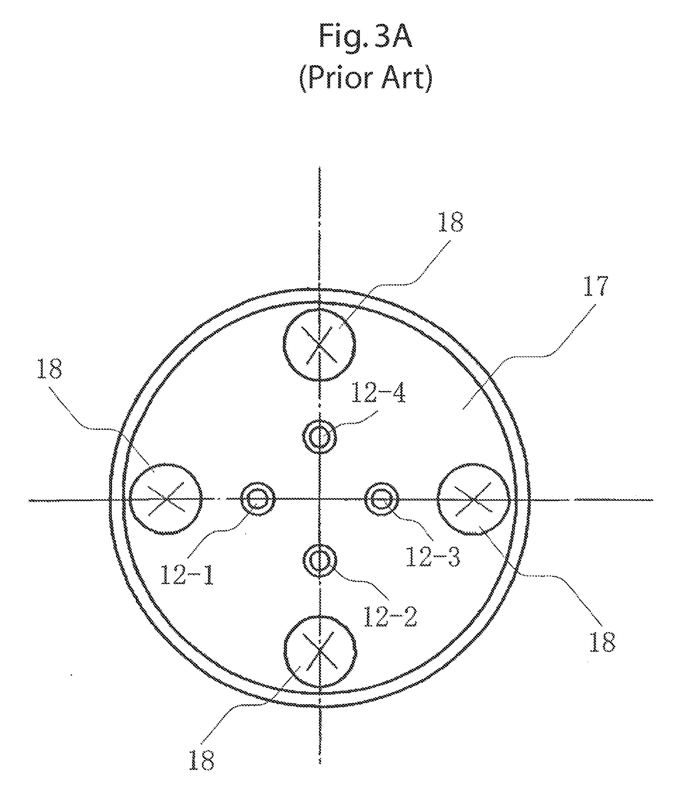

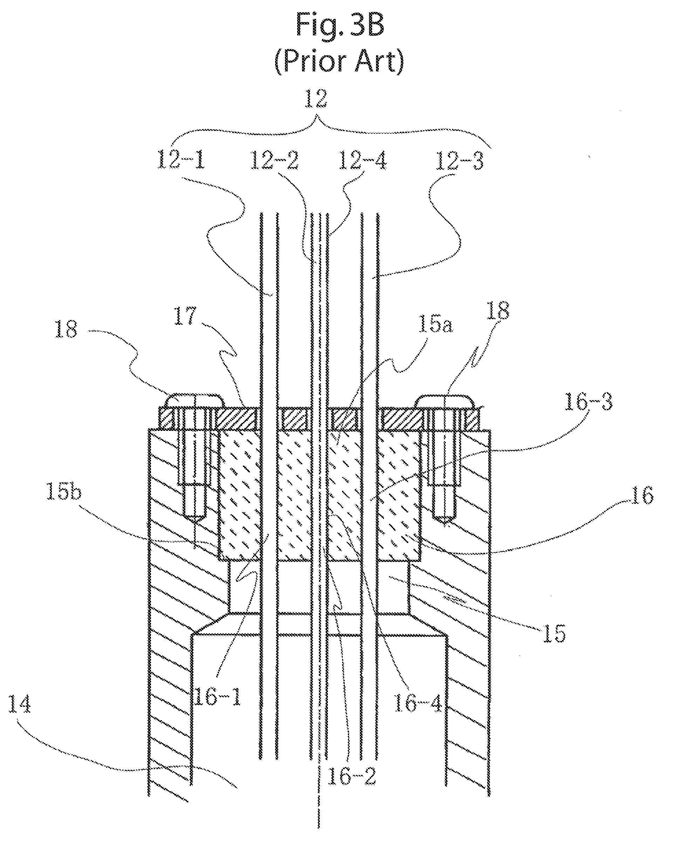

FIGs. 3(a) and (b) illustrates an example of a conventional grommet structure that has been proposed as the seal structure for the lead-out passage 15. FIG. 3 (a) is a plan view of this grommet structure, and FIG. 3 (b) is a lateral sectional diagram thereof. In this grommet structure, an inner step portion 15b is provided in an opening portion 15a of the lead-out passage 15, where a columnar packing 16 made from a material having elasticity, such as rubber, is pressed into the opening portion 15a in which this inner step portion 15b is provided.

Through passages 16-1 through 16-4, through which pass the lead lines 12-1 through 12-4, are formed in the axial direction in the packing 16. The packing 16 is pressed into the opening portion of the lead-out passage 15 in a state wherein the lead lines 12-1 through 12-4 pass through the through passages 16-1 through 16-4.

If the lead lines 12-1 through 12-4 are typical lead lines, which have coatings made out of plastic, or in other words, if the outer peripheries of the lead lines 12-1 through 12-4 are coated with plastic coatings, then the plastic coatings of the lead lines 12-1 through 12-4 will be compressed, in the radial direction, by the packing 16, forming a tight seal between the inner peripheral surfaces of the through passages 16-1 through 16-4 of the packing 16 and the outer peripheral surfaces of the lead lines 12-1 through 12-4, thus maintaining the airtightness of the inner cavity 14. Note that a retaining plate 17 is securely fastened, by a bolt 18, to the opening portion 15a of the lead-out passage 15, to prevent the packing 16 from coming out.

However, in the electromagnetic flowmeter 100 as set forth above, the use of the conventional grommet structure that is used as the seal structure for the lead-out passage 15 assumes the use of typical lead lines wherein the outer peripheries of the lead lines 12-1 through 12-4 are covered with the plastic covering, where there is a problem in that the airtightness of the inner cavity 14 cannot be maintained if the plastic coverings of the lead lines 12-1 through 12-4 are covered by a shield. This problem will be explained in detail below.

In the electromagnetic flowmeter 100 set forth above, the lead lines 12-1 through 12-4 tend to collect the magnetic flux differential noise due to the magnetic excitation, and other electrical noises, where these noises have an impact on the measurement accuracy. For countermeasures for this, there is the known technology of magnetic shielding by covering the plastic coatings of the lead lines 12-1 through 12-4 with tubes made out of a material having a high magnetic permittivity and electrical conductivity, along with the known technology of electric shielding through grounding. Specifically, in the consideration of the ease of interconnection and routing, lead lines are used wherein a flexible mesh-shaped composition tube is covered over the resin coatings. Note that when the lead lines are applied to the electromagnetic flowmeter 100, whenever possible, it is preferable that the lead lines be covered, from one end to the other, with the flexible mesh-shaped composition tube.

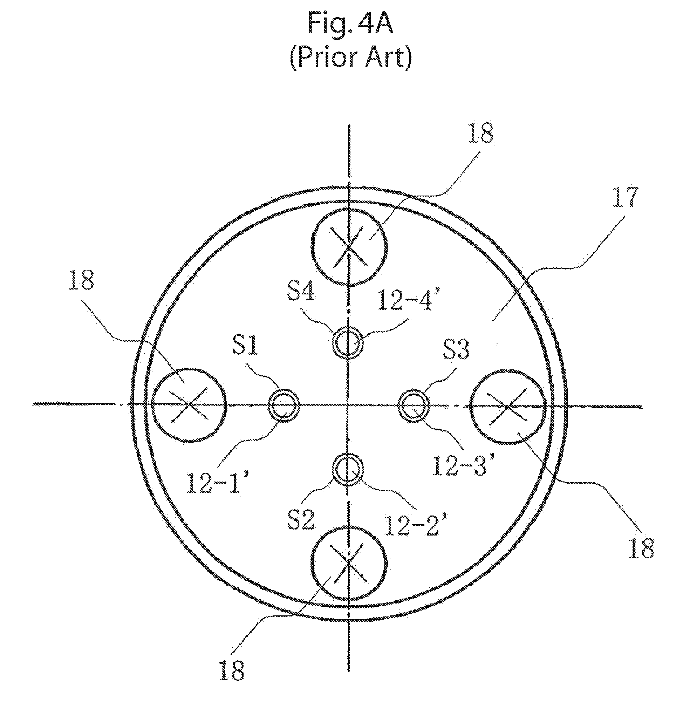

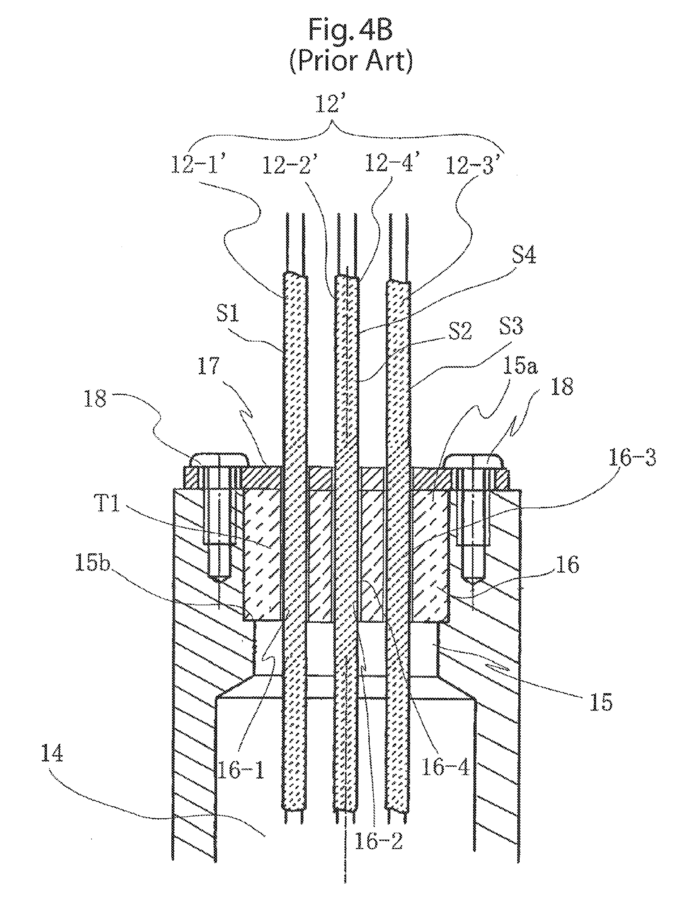

FIG. 4 illustrates an example of the use of a lead line (a shielded lead line) wherein a shield made from the flexible mesh-shaped sleeve is provided around the outer periphery in the conventional grommet structure that is illustrated in FIG. 3. In this example, the outer peripheries of the lead lines 12-1' through 12-4' are covered by the shields S1 through S4 that are flexible mesh-shaped sleeves. The shields S1 through S4 have high magnetic permittivity and electrical conductivity. In this case, the lead lines 12-1 through 12-4 are compressed in the radial direction by the packing 16. However, the shields S1 through S4 are mesh shapes, which causes a loss of airtightness of the inner cavity 14 because it is not possible to perfectly seal the meshes of the shields S1 through S4.

The present invention was created in order to resolve these problem areas, and the object thereof is to provide an electromagnetic flowmeter that has been made less susceptible to the influence of magnetic flux differential noise and electrical noise through the use of shielded lead lines, and that is able to maintain with ease the airtightness of an inner cavity when connecting the shielded lead lines to the outside.

### SUMMARY OF THE INVENTION

The present invention, in order to achieve the object set forth above, is an electromagnetic flowmeter for measuring the magnitude of flow of a fluid that is flowing within a measuring tube based on a signal-inducing EMF at that is produced between detecting electrodes, having: a measuring tube; a magnetic excitation coil that is disposed with the direction in which the magnetic field is generated perpendicular to the direction of flow of a fluid that flows within the measuring tube; detecting electrodes disposed perpendicular to the magnetic field that is generated by the excitation coil and facing each other within the measuring tube; a lead line bundle that is connected to the magnetic excitation coil and to the detecting electrodes; a lead-out passage to the outside of the lead line bundle; and a columnar packing that is pressed into the opening portion of the lead-out passage to press each lead line of the lead line bundle that passes through each through passage, formed in the axial direction, towards the radial direction to produce a seal, wherein: the individual lead lines of the bundle of lead lines each include: a shield made from a flexible mesh-shape composition tube that covers the outer peripheral surface of the lead line; and a tube that is provided at the portion of the shield that is positioned in the through passage of the packing; and wherein; the inner peripheral surface of the tube and the outer peripheral surface shield are bonded together by an adhesive agent.

In this invention, the packing is pressed into the opening portion of the lead-out passage in a state wherein a tube for each individual lead line is installed in an individual through passage that is formed in the axial direction. In this case, for each individual lead line, the shielded portion for which the tube is installed is pressed in the radial direction by the packing. Here the airtightness is maintained by the tight seal between the inner peripheral surface of the individual through passages of the packing and the outer peripheral surfaces of the individual lead lines. Additionally, the tight seal is maintained by an adhesive agent between the shield and the inner peripheral surface of the tube for the individual lead line.

In the present invention, the adhesive agent may be caused to flow in between the shield and the inner peripheral surface of the tube after the tube has been installed on the individual lead line. Doing so causes the adhesive agent to penetrate the gaps in the shield mesh, so as to maintain the airtightness between the shield mesh and the tube through the adhesive agent that has penetrated and hardened in the spaces in the mesh.

In the present invention, as a method for bonding between the shield and the inner peripheral surface of the tube, using the adhesive agent, there is, in addition to the method of causing the adhesive agent to flow between the shield and the inner peripheral surface of the tube, a method that can be considered wherein a heat shrink tube can be used with an adhesive agent coated onto the inner peripheral surface thereof. In this case, the heat shrink tube is installed on a lead line that is covered with a shield, and then heated. The heat shrink tube is caused to shrink, in the diameter thereof, due to the heating, where, along with tightly sealing to the shield thereof, the adhesive material on the inner peripheral surface is melted by the heat, and thus flows into the spaces in the mesh in the shield. This adhesive material that has flowed into the spaces in the mesh hardens after cooling. The airtightness between the tube and the mesh of the shield is maintained thereby.

Given the present invention, a shield having a flexible mesh-shape sleeve is provided on the outer peripheral surface of each individual lead line, a tube is provided in the position, on the shield, of the through passage of the packing, and the shield and the inner peripheral surface of the tube are bonded to each other by an adhesive agent, thus not only reducing the influence of the magnetic flux differential noise and the electrical noise, but also maintaining the airtight seal between the inner peripheral surface of each through passage in the packing and the outer peripheral surface of the tube for each lead line, and between the shield and the inner peripheral surface of the tube for each lead line, making it possible to maintain with ease the airtightness of the inner cavity when connecting a shielded lead line to the outside.

Additionally, given the present invention the use of the heat shrink tube wherein the inner peripheral surface thereof is coated with an adhesive agent makes it possible for the installation of the tube and the bonding to the shield to be performed in the same operation, making it possible to improve operational efficiency.

### BRIEF DESCRIPTION OF THE DRAWINGS

FIGs. 1A and 1B are diagrams illustrating the critical portions (the grommet structure) in one form of embodiment of an electromagnetic flowmeter according to the present invention.
FIG. 2 is a block diagram illustrating the critical portions of a conventional electromagnetic flowmeter.
FIGs. 3A and 3B are diagrams illustrating one example of a conventional grommet structure.
FIGs. 4A and 4B are diagrams illustrating an example of the use of a lead line that is provided with a shield (a flexible mesh-shaped composition tube) on the outer peripheral surface thereof in a conventional grommet structure.

### DETAILED DESCRIPTION OF THE INVENTION

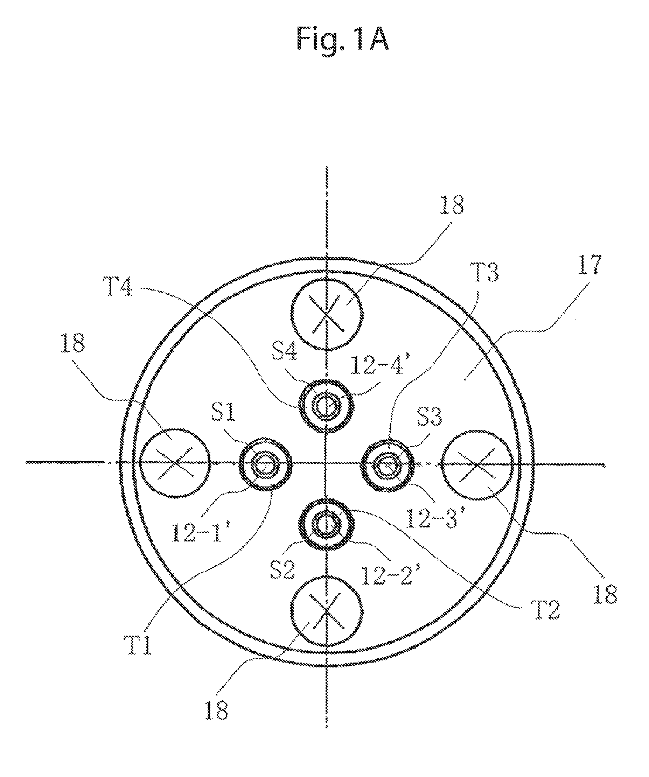

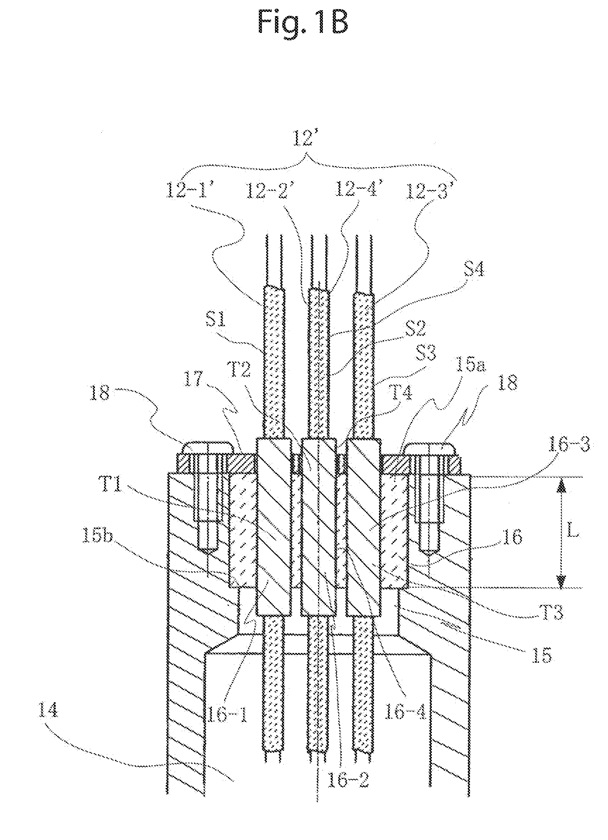

The present invention will be explained below based on the drawings. FIG. 1 is a diagram illustrating the critical portion (the grommet structure) of one form of embodiment of an electromagnetic flowmeter according to the present invention. In this figure, the same references as in FIG. 4 indicate the identical or equivalent structural elements as the structural elements described in reference to FIG. 4, and thus descriptions thereof will be omitted.

In this form of embodiment, tubes T1 through T4 are equipped on the portions of the shields S1 through S4 that are positioned at the through passages 16-1 through 16-4, on the lead lines 12-1' through 12-4', where an adhesive agent bonds between the tubes T1 through T4 and the shields S1 through S4.

The tubes T1 through T4 are plastic or metal, and the outer peripheral surfaces thereof are smooth so as to enable adequate airtightness through the pressure of the packing 16, and should fulfill the design items required in the grommet portion, such as corrosion durability and thermal durability. In the present form of embodiment, the tubes T1 through T4 are plastic that has corrosion durability and thermal durability, wherein the outer peripheral surfaces are smooth.

In the present form of embodiment, prior to routing the lead lines 12-1' through 12-4' through the through passages 16-1 through 16-4 of the packing 16, the tubes T1 through T4 are installed at the shield S1 through S4 portions at the positions of the through passages 16-1 through 16-4 of the packing 16 on the lead lines 12-1' through 12-4', and the adhesive agent is caused to flow between the tubes T1 through T4 and the shields S1 through S4, to cause the adhesive agent to penetrate the spaces in the meshes of the shields S1 through S4.

The adhesive agent that is caused to flow between the tubes T1 through T4 and the shields S1 through S4 should have properties that are adequate to produce airtightness between the tubes and the meshes through adequately penetrating the spaces in the meshes in the shields S1 through S4, and should satisfy the design items that are required in the grommet, such as manufacturability, corrosion durability, thermal durability, and the like.

In the present form of embodiment, the packing 16 is pressed into the opening portion 15a of the lead-out passage 15 in a state wherein the lead lines 12-1' through 12-4' of the lead line bundle 12' are threaded through the through passages 16-1 through 16-4 that are formed in the axial direction, and wherein the portions of the shields S1 through S4 wherein the tubes 16-1 through 16-4 of the lead lines 12-1' through 12-4' are equipped are positioned in the through passages 16-1 through 16-4.

Doing so causes the portions of the shields S1 through S4 whereon the tubes 16-1 through 16-4 of the lead lines 12-1' through 12-4' are equipped to be pressed by the packing in the radial direction. In this case, the pressure in the radial direction that is applied to the tubes 16-1 through 16-4 is an appropriate surface pressure that is determined based on, for example, the relationship between the outer diameter of the packing 16 and the inner diameter of the opening portion 15a of the lead-out passage 15.

Here an airtight seal is maintained by the sealing between the inner peripheral surfaces of the through passages 16-1 through 16-4 of the packing 16 and the outer peripheral surfaces of the tubes T1 through T4 of the lead lines 12-1' through 12-4'. In other words, having the outer peripheral surfaces of the tubes T1 through T4 to be smooth and the inner peripheral surfaces of the passages 16-1 through 16-4 of the packing 16 have tight seals with the outer peripheral surfaces of the tubes T1 through T4, maintains tight seals between the inner peripheral surfaces of the passages 16-1 through 16-4 of the packing 16 and the outer peripheral surfaces of the tubes T1 through T4.

Additionally, airtight seals are maintained by the adhesive agent between the inner peripheral surfaces of the tubes T1 through T4 of the lead lines 12-1' through 12-4' and the shield S1 through S4. That is, the adhesive agent is caused to penetrate to the spaces in the meshes of the shields S1 through S4 through the adhesive agent being caused to flow between the tubes T1 through T4 and the shields S1 through S4, maintaining the airtightness between the tubes T1 through T4 and the shields S1 through S4 through the adhesive agent being caused to penetrate the spaces in the meshes, and then hardening.

As can be understood from the description above, given the present invention, shields S1 through S4 made from flexible composition tubes of a mesh shape are provided on the outer peripheral surfaces of the lead lines 12-1' through 12-2', tubes T1 through T4 are equipped on the positions of the shields S1 through S4 wherein the through passages 16-1 through 16-4 of the packing 16 are positioned, and the inner peripheral surfaces of the tubes T1 through T4 and the shields S1 through S4 are bonded to each other by the adhesive agent, thus reducing the effect of the magnetic flux differential noise and the electric noise, while also maintaining the airtightness between the inner peripheral surfaces of the through passages 16-1 through 16-4 of the packing 16 and the outer peripheral surfaces of the tubes T1 through T4 of the lead lines 12-1' through 12-4' and the airtightness between the shields S1 through S4 and the inner peripheral surfaces of the tubes T1 through T4 of the lead lines 12-1' through 12-4', so as to maintain, with ease, the airtightness of the inner cavity 14 when connecting the shielded lead lines 12-1' through 12-4' to the outside.

Note that in the grommet structure illustrated in FIG. 1, heat shrink tubes wherein the inner peripheral surface thereof is coated with an adhesive agent may be used as the tubes T1 through T4. When heat shrink tubes are used as the tubes T1 through T4, the diameters of the tubes are shrunk through the application of heat, causing the adhesive agent on the inner peripheral surface to melt due to the heat, while, at the same time, causing the sealing to the shields S1 through S4, to cause the adhesive agent to flow into the spaces in the meshes of the shields S1 through S4. The adhesive agent that has flowed into the spaces of the meshes hardens after cooling. This maintains the airtightness between the shields S1 through S4 and the tubes T1 through T4. Operational efficiency is increased because the installation of the tubes T1 through T4 and the bonding to the shields S1 through S4 are performed in a single operation when heat shrink tubes are used as the tubes T1 through T4.

Note that although in the grommet structure illustrated in FIG. 1 the length of the tubes T1 through T4 were longer than the length L of the packing 16 in the axial direction, conversely, this length may be shorter than the length L of the packing 16 in the axial direction.

Furthermore, while in the grommet structure illustrated in FIG. 1 a retaining plate 17 is connected and secured to the opening portion 15a by a bolt 18 in order to prevent the packing 16 from coming out, conversely, the packing 16 may be prevented from coming out through the installation of an E-ring, or the like, on the opening portion 15a.

## Claims

1. An electromagnetic flowmeter for measuring the magnitude of flow of a fluid flowing within a measuring tube based on a signal-inducing EMF at that is produced between detecting electrodes, comprising: a measuring tube; a magnetic excitation coil that is disposed with the direction in which the magnetic field is generated perpendicular to the direction of flow of a fluid that flows within the measuring tube; detecting electrodes disposed perpendicular to the magnetic field that is generated by the excitation coil and facing each other within the measuring tube; a lead line bundle that is connected to the magnetic excitation coil and to be detecting electrodes; a lead-out passage to the outside of the lead line bundle; and a columnar packing that is pressed into the opening portion of the lead-out passage to press each lead line of the lead line bundle that passes through each through passage, formed in the axial direction, towards the radial direction to produce a seal, wherein:
the individual lead lines of the bundle of lead lines each comprise:
a shield made from a flexible mesh-shape sleeve that covers the outer peripheral surface of the lead line; and
a tube that is provided at the portion of the shield that is positioned in the through passage of the packing; and wherein;
the inner peripheral surface of the tube and the shield are bonded together by an adhesive agent.

2. The electromagnetic flowmeter as set forth in Claim 1, wherein:
the tube is a heat shrinkable tube and the adhesive agent is coated onto the inner peripheral surface thereof.

3. Then electromagnetic flowmeter as set forth in Claim 1, wherein:
the tube and the adhesive agent have corrosion durability and thermal durability.

4. The electromagnetic flowmeter as set forth in Claim 1, wherein:
a retaining plate is secured to an opening portion of the lead-out passage to prevent the packing from coming out.
